## Europäisches Patentamt

## European Patent Office

## Office européen des brevets

(19)

(11) Numéro de publication: **0 195 695**
**B1**

(12) ## FASCICULE DE BREVET EUROPEEN

(45) Date de publication du fascicule du brevet: **23.05.90**

(51) Int. Cl.⁵: **B 01 F 3/08**

(21) Numéro de dépôt: **86400312.4**

(22) Date de dépôt: **13.02.86**

(54) Procédé et dispositif de la fabrication en continu d'une émulsion.

(30) Priorité: **15.02.85 FR 8502241**

(43) Date de publication de la demande:
**24.09.86 Bulletin 86/39**

(45) Mention de la délivrance du brevet:
**23.05.90 Bulletin 90/21**

(84) Etats contractants désignés:
**AT BE CH DE FR GB IT LI LU NL SE**

(56) Documents cités:
**EP-A-0 101 007**
**WO-A-84/03232**
**DE-A-2 018 092**
**DE-A-2 357 212**
**DE-C- 913 218**
**FR-A-1 414 723**
**FR-A-1 486 341**
**FR-A-2 471 209**
**FR-A-2 489 170**

(73) Titulaire: **Wenmaekers, Paul**
**2/4, Avenue Paul Déroulède**
**F-75015 Paris (FR)**

(72) Inventeur: **Wenmaekers, Paul**
**2/4, Avenue Paul Déroulède**
**F-75015 Paris (FR)**

(74) Mandataire: **Martin, Jean-Jacques et al**
**Cabinet REGIMBEAU 26, Avenue Kléber**
**F-75116 Paris (FR)**

Courier Press, Leamington Spa, England.

## EP 0 195 695 B1

**Description**

La présente invention est relative à un procédé et à un un dispositif de fabrication en continu d'une émulsion.

A l'heure actuelle, la préparation d'émulsions à l'échelle industrielle fait appel à de nombreuses opérations parmi lesquelles la mise à proportion des différents composants de l'émulsion est le plus . souvent effectuée à poste fixe, les composants étant pesés avant mise à température d'émulsion, c'est-à-dire le plus souvent à l'état solide, puis transportés et introduits dans un fondoir ou fondeuse avant d'être ensuite introduits dans un cuve émulsionneuse afin d'effectuer l'émulsion proprement dite. L'ensemble de ces opérations est long et coûteux car les opérations de pesée notamment sont le plus souvent effectuées de manière isolée et ne peuvent pas être introduites de manière simple dans un processus industriel. En fait, la préparation d'émulsion à l'échelle industrielle n'a pu guère dans son principe, jusqu'à ce jour, se différencier de la préparation extemporanée d'émulsions pharmaceutiques si ce n'est par la quantité de composants mise en jeu. Pour cette raison, les émulsions sont acteullement préparées à l'échelle industrielle en quantité limitée, qui, le plus souvent, ne dépassent pas en poids 1 tonne par jour.

Ainsi le document DE—C—913 218 décrit-il un mode opératoire et un dispositif de fabrication d'émulsion pouvant fonctionner en continu. Dans ce dispositif cependant, le dosage de corps gras est effectué en volume par quantités discrètes. Un tel mode opératoire et un tel système ne peuvent donc être utilisés pour effectuer des préparations d'émulsion dans lesquelles le dosage doit être effectué à proportion en masse, telle que les émulsions pharmaceutiques.

Aux inconvénients déjà cités s'ajoute l'inconvénient, en raison de la quantité relativement limitée préparée par coulée, d'un défaut d'homogénéité des lots de produit conditionné. Ce dernier défaut apparaît d'une importance extrême dans le domaine des émulsions pharmaceutiques pour lesquelles les tolérances d'un lot à un autre sont particulièrement strictes.

La présente invention a pour but de rémedier aux inconvénients précités par la mise en oeuvre d'un procédé et d'un dispositif de fabrication en continu d'une émulsion.

Un objet de la présente invention est la mise en oeuvre d'un procédé et d'un dispositif de fabrication en continu d'une émulsion permettant un rendement très nettement amélioré par rapport aux techniques actuelles.

Un autre objet de la présente invention est la mise en oeuvre d'un procédé et d'un dispositif de fabrication en continu d'une émulsion permettant, du fait d'une commande totalement automatisée, une très grande précision de dosage des composants et, de ce fait, une très grande homogénéité des différents lots de produit conditionné due à une excellente fiabilité de l'ensemble.

Un autre objet de la présente invention est la mise en oeuvre d'un procédé et d'un dispositif permettant la préparation d'un produit final de qualité améliorée du fait de l'optimalisation des différentes phases opératoires.

Le procédé de fabrication en continu selon d'invention, d'une émulsion comprenant, dans un premier liquide, une pluralité de composants en suspension est remarquable ce ce qu'il consiste à amener ces composants à l'état liquide de façon à constituer une pluralité de deuxièmes liquides susceptibles d'être introduits en suspension dans le premier liquide. Les composants sont introduits à proportion en masse sous forme liquide dans un fondoir-doseur et le contenu du fondoir-doseur est amené à température d'émulsion. Une quantité déterminée de premier liquide est amenée à température d'émulsion et la quantité du premier liquide et le contenu du fondoir-doseur sont versés dans une cuve à émulsion. L'émulsion est ensuite provoquée dans la cuve à émulsion par agitation. Les dispositif de fabrication en continu selon l'invention, d'une émulsion comprenant dans un premier liquide une pluralité de composants en suspension est remarquable en ce qu'il comporte des moyens pour amener les composants à l'état liquide de façon à constituer une pluralité de deuxièmes liquides susceptibles d'être introduits en suspension dans le premier liquide. Des moyens permettant d'amener une quantité déterminée du premier liquide à température d'emulsion et un fondoir-doseur permet de recevoir à proportion le premier liquide et les composants sous forme liquide, le fondoir-doseur étant capable d'amener son contenu à la température d'émulsion. Une cuve à émulsion est susceptible de recevoir le contenu du fondoir-doseur et la quantité de premier liquide. La cuve à émulsion permet, à partir de moyens propres, de provoquer l'émulsion.

L'invention trouve application de manière avantageuse dans le domaine de l'industrie pharmaceutique, de l'industrie alimentaire et chimique notamment.

Elle sera mieux comprise à la lecture de la description et à l'observation des dessins ci-après dans lesquels:

la figure 1 représente un schéma général d'un dispositif susceptible de permettre la mise en oeuvre du procédé de l'invention,

la figure 2 représente un mode de réalisation particulièrement avantageux d'un des éléments du dispositif représenté en figure 1,

la figure 3 représente en 3a, 3b et 3c des détails de réalisation d'éléments particuliers du dispositif tel que représenté en figure 1,

les figures 4, 5 et 6 représentent également des détails de réalisation d'éléments particuliers du dispositif représenté en figure 1.

Le procédé et le dispositif de l'invention seront décrits à titre d'exemple non limitatif dans le cas de la préparation ou fabrication en continu d'un produit pharmaceutique possédant des propriétés cosmétologiques et thérapeutiques et connue sous la marque déposée "BIAFINE". Ce produit se présente sous la forme d'un complexe en émulsion, lequel a fait l'objet d'une description détaillée dans le brevet français n° 2 112 147 au nom de la Demanderesse. Le complexe en émulsion ainsi décrit comporte de 5 à 20% d'acide gras, de 1 à 30% d'émulsifiant, de 2 à 40% d'humectant, de 0,1 à 5% de colloïde protecteur et de 0 à 60% de cires et d'huiles.

Le procédé et le dispositif de l'invention seront décrits dans le cas ou les cires sont constituées par du monostéarate de glycol, de la paraffine dure 5/50, du palmitate de cétyle et de l'acide stéarique. Les huiles peuvent comporter de la paraffine liquide, une huile animale, le perhydrosqualène, le propanédiol 1,2, et une huile végétale, l'huile d'avocat. Le colloïde protecteur est de préférence constitué par de l'alginate de sodium. En outre, une base liquide, la triéthanolamine est utilisée pour donner à l'émulsion finale un pH égal à 6,2. D'autres constituants peuvent entrer dans la composition finale tels que par exemple des parfums liquides ou des antiseptiques par exemple. Le liquide dans lequel l'émulsion est provoquée est constitué par de l'eau déminéralisée.

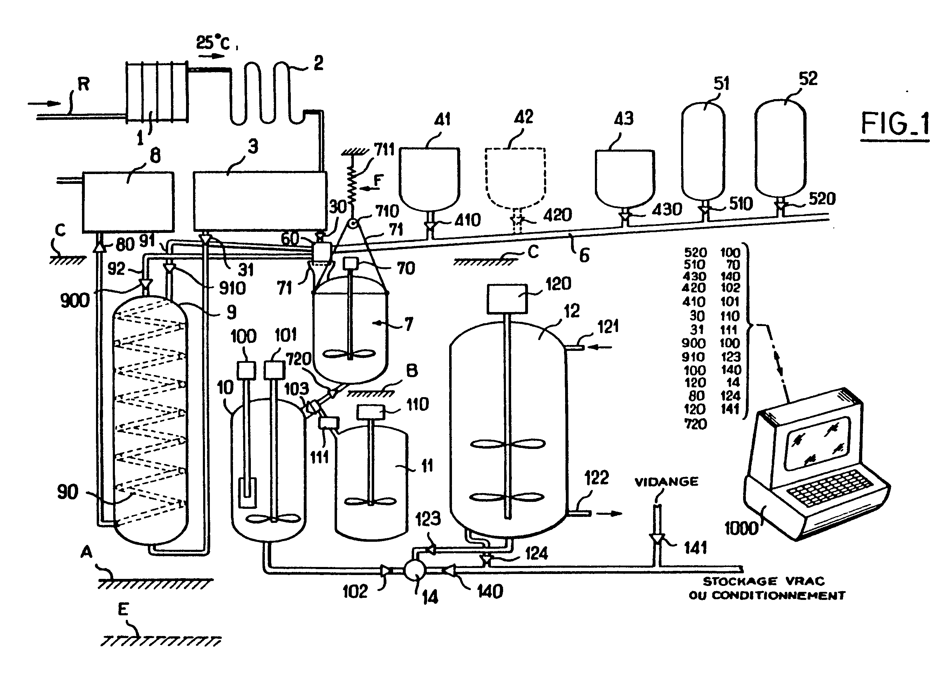

Le procédé et le dispositif de l'invention seront décrits en liaison avec la figure 1.

Selon le procédé de fabrication en continu d'une émulsion de la présente invention, l'émulsion comprend dans un premier liquide constitué par exemple par de l'eau déminéralisée une pluralité de composants en suspension. Ainsi que représenté sur la figure 1, l'eau déminéralisée est obtenue à partir d'un réchauffeur 1 ou échangeur de chaleur capable d'amener l'eau du réseau de distribution R à une température de l'ordre de 25°C. L'eau ainsi réchauffée est ensuite amenée à un dispositif déminéraliseur 2 permettant par échange ionique par osmose la production d'une eau déminéralisée. L'eau déminéralisée présente une résistivité de 1 Mégohm/cm selon les normes en vigueur. L'eau déminéralisée ainsi obtenue est stockée dans un réservoir 3. L'eau déminéralisée est ensuite amenée à la température d'emulsion au moyen notamment d'un bouilleur 9, une vanne de commande 31 permettant de réguler l'alimentation en eau du bouilleur 9 par le réservoir 3. En outre, les composants constitutifs de l'émulsion sont amenés à l'état liquide de façon à constituer une pluralité de deuxièmes liquides susceptibles d'être introduits en suspension dans le premier liquide ou eau déminéralisée. A cet effet, les composants tels que notamment les cires et les huiles sont introduits à proportion en masse dans un fondoir-doseur 7 sous forme liquide, le contenu du fondoir-doseur étant amené à la température d'emulsion. Afin d'amener les composants à l'état liquide, le dispositif de l'invention comporte une pluralité de moyens constitués par exemple par des fondoirs à cire 41, 42, 43 et par des réservoirs à huile notés par exemple 51, 52. Chacun des fondoirs à cire 41, 42, 43 et des réservoirs à huile 51, 52 est relié à une canalisation notée 6 sur la figure 1, par l'intermédiaire d'une vanne de commande 410, 420, 430, 510, 520. Sur la figure 1, on a représenté une seule canalisation 6 afin de ne pas nuire à la clarté du dessin. Bien entendu, le dispositif de l'invention peut comporter de manière non limitative une pluralité de canalisations 6, une par fondoir à cire et/ou réservoir à huile, ces canalisations pouvant être réunies au niveau d'un collecteur commun 60. Sur la figure 1, un nombre limité de fondoirs à cire et de réservoirs à huile ont été représentés intentionnellement. Un fondoir ou réservoir à huile est de préférence utilisé pour un des composants.

Sur la figure 1, le fondoir-doseur 7 est représenté de manière schématique. Il comporte essentiellement une cuve munie de moyens d'agitation 70 et une buse d'entrée 71 à laquelle est connecté le collecteur 60 précédemment cité. Sur la figure 1, les moyens de chauffage des différents fondoirs à cire 41, 42, 43 et du fondoir-doseur 7 ne sont pas représentés afin de ne pas nuire à la clarté de l'ensemble. Un réservoir supplémentaire 8 contient de l'huile de paraffine. Le réservoir d'huile est connecté par l'intermédiaire d'une vanne de commande 80 à un serpentin 90 du bouilleur 9. La sortie du serpentin 90 est connectée par une vanne 910 au collecteur 60. L'huile de paraffine est ainsi réchauffée avant d'être amenée au fondoir-doseur 7. Le fondoir-doseur est représenté sur la figure 1 suspendu par des éléments de fixation 71 à un système de pesage 711. L'élément de pesage 711 est par exemple le levier de traction d'une bascule électronique solidaire de l'élément de fixation 71 par l'intermédiaire d'une poulie 710. En outre, le fondoir-doseur 7 est connecté par un conduit souple et une vanne 720 à une cuve à émulsion 10. La cuve à émulsion 10 est munie de moyens d'agitation 101 et de moyens de régulation de température 100. La cuve à émulsion 10 est elle-même connectée par l'intermédiaire d'une vanne 102 à une cuve de stockage 12 du produit final. La cuve de stockage 12 est une cuve thermostatée permettant le refroidissement de l'émulsion obtenue dans des conditions appropriées. Les entrée 121 et sortie 122 de la cuve de stockage 12 representent l'entrée et la sortie d'un liquide de refroidissement de la cuve.

Le premier liquide ou eau déminéralisée transitant par le bouilleur 9 est versé en quantité déterminée dans la cuve émulsion 10. Le contenu du fondoir-doseur 7 est ensuite versé également dans la cuve à émulsion 10 et l'émulsion est provoquée à l'aide des moyens d'agitation 101. En outre, dans le cas ou l'émulsion comporte un colloïde de protection, le dispositif de l'invention comprend un réservoir à colloïde 11 et des moyens de chargement-dosage en colloïde 111.

Selon un mode de réalisation non limitatif de l'invention, les moyens de chargement dosage en colloïde 111 sont connectés à une vanne d'entrée 103 de la cuve à émulsion 10. Les moyens de chargement-dosage en colloïde 111 peuvent par exemple être constitués par une pompe à mesure de débit commandée électroniquement et jouant ainsi la fonction de doseur. Dans les installations, des essais ont pu être effectués de manière satisfaisante au moyen d'une pompe distribuée par la Société STOPPIL INDUSTRIE, pompe ayant fait l'objet d'une description dans la fiche technique n° 024 de cette Société.

De préférence, et selon un mode de réalisation avantageux du procédé de l'invention, l'introduction à proportion de tout ou partie des composants dans le fondoir-doseur 7 est effectuée au moyens de ce dernier. Par exemple, les cires sont amenées à l'état fondu séparément au moyen des fondoirs à cire 41, 42, 43, les huiles sont déversées par les réservoirs tels que 51, 52 sans préchauffage ou par le réservoir 8 après préchauffage par le bouilleur 9 dans le fondoir-doseur 7 successivement. Le fondoir-doseur 7 permet à chaque introduction des composants à l'état liquide, une détermination précise de la masse de chaque composant introduite dans le fondoir-doseur, 7 et en définitive une mise à proportion en continu ou quasi continu de l'ensemble des composants. En effect, les fondoirs à cire pouvant être chargés séparément en produit solide, chaque produit solide étant introduit dans le bain de cire fondue correspondant, l'alimentation du fondoir-doseur en cire fondue et/ou en huile peut être alors effectuée par la seule commande des vannes correspondantes en fonction des quantités nécessaires. Ainsi, de manière préférentielle, l'introduction à proportion du premier liquide, eau déminéralisée et des composants, dans la cuve à émulsion 10 est effectuée par l'intermédiaire du fondoir-doseur 7. L'utilisation du fondoir-doseur pour la détermination séparée des quantités de premier liquide et/ou de composants à proportion, permet une production d'émulsion en continu ou en quasi continu, chaque coulée d'émulsion pouvant être stockée dans la cuve de stockage 12 ou délivrée pour conditionnement par l'intermédiaire d'une vanne de distribution aiguillage 14 et de vannes correspondantes 140, 123, 124, 141.

Sur la figure 1, une architecture de l'ensemble de l'installation ou dispositif de l'invention particulièrement avantageuse a été représentée. Sur cette figure, l'installation est agencée par rapport à au moins trois niveaux de référence successifs, notés C, B, A du niveau le plus haut au niveaule plus bas. On remarquera que l'ensemble des réservoirs à eau déminéralisée 3, à paraffine liquide 8, réservoirs à huile 51, 52, fondoirs à cire 41, 42, 43, constituant en fait des réservoirs de cire liquide, sont disposés à un niveau supérieur au niveau C le plus haut. De même, le fondoir-doseur 7 est disposé à un niveau supérieur au niveau B intermédiaire, mais inférieur au niveau C supérieur. Efin, la cuve à émulsion 10, le point d'entrée du serpentin 90 du bouilleur 9 alimenté en huile de paraffine, le point d'entrée du bouilleur 9 lui-même alimenté en eau déminéralisée par le réservoir 3 sont situés à un niveau supérieur au niveau A le plus bas, mais lui-même inférieur au niveau intermediaire B. Les points de sortie du serpentin 90 et du bouilleur 9 délivrant respectivement l'huile de paraffine réchauffée et l'eau réchauffée, sont sensiblement au niveau de la buse d'entrée 71 du fondoir-doseur 7 ou du collecteur 60, mais nécessairement à un niveau inférieur au niveau des réservoirs 3 et 8. Ainsi, le chargement successif du fondoir-doseur 7 en premier liquide puis en composants, puis le chargement de la cuve à émulsion 10 est effectué par gravimétrie. Cette solution présente l'avantage d'autoriser la suppression de toute pompe de chargement, lesquelles présentent des inconvénients du point de vue de la fiabilité de fonctionnement et de la précision de la détermination des quantités introduites. En effet, la commande d'une pompe ne pouvant produire des effets, du point de vue des quantités de composants et/ou d'eau mises en mouvement, instantanés, la détermination précise des quantités apparaît critique.

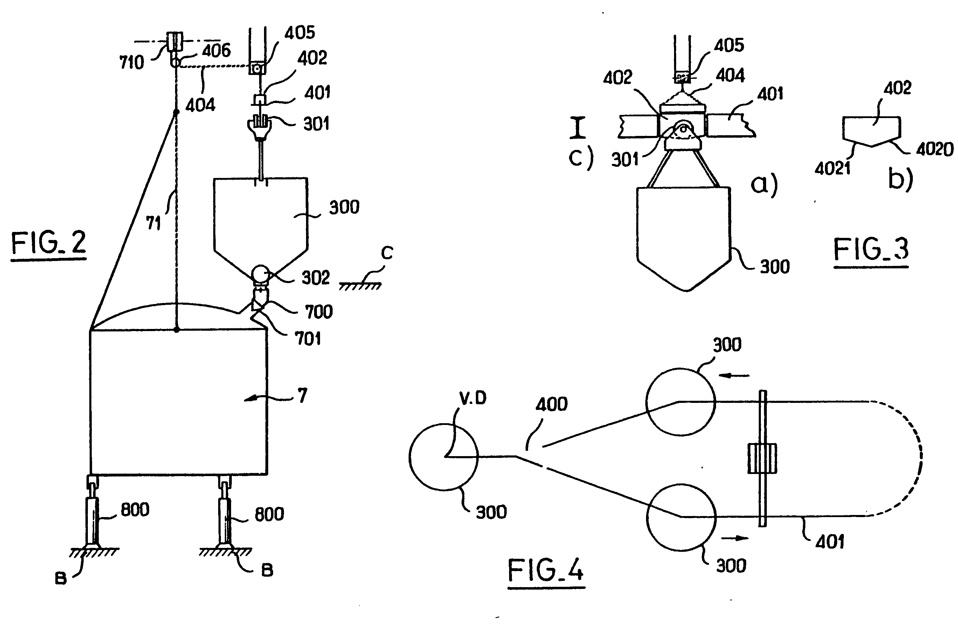

Dans ce but, le réservoir à colloïde 11 peut également être installé à un niveau supérieur au niveau de la cuve à émulsion 10. En outre, le réservoir à colloïde 11 peut être constitué par un train de nacelles élémentaires 300 se déplaçant selon un circuit détérminé 401 ainsi que représenté sur les figures 2, 3 et 4.

En outre, dans le cas où les émulsions fabriquées sont des émulsions très fluides, la cuve de stockage 12 peut être placée à un quatrième niveau E inférieur au niveau le plus bas noté A. Cette disposition a pour avantage de supprimer une pompe de transvasement entre cuve-émulsionneuse 10 et cuve de stockage 12.

Selon le mode de réalisation préférentiel des figures précitées, le circuit de circulation 401 des nacelles 300 est tel que chaque nacelle circule sensiblement à un niveau C supérieur au niveau B du fondoir-doseur 7. Chaque nacelle est apte à délivrer son contenu au fondoir-doseur. Ainsi, l'ensemble des composants de l'émulsion ainsi que le colloïde protecteur est introduit à proportion dans la cuve à émulsion 10 par l'intermédiaire du fondoir-doseur 7. La mise à proportion de l'ensemble des constituants de l'emulsion et du premier liquide est réalisée au moyens du fondoir-doseur. L'ensemble de l'installation et du procédé ainsi décrit est conduit par un microprocesseur ou microordinateur référencé 1000 sur la figure 1. Bien que les connections de commande de l'ensemble des vannes et des moyens agitateurs et/ou régulateurs de température n'aient pas été représentées sur cette figure, afin de ne pas nuire à la clarté du dessin, on comprendra que la commande de chaque vanne ou moyen précité est réalisée à partir d'un programme permettant la réalisation des opérations précitées successivement. Les vannes de commande utilisées sont des vannes de type tout ou rien aisément actionnées au moyen des ordres donnés par le microordinateur 1000 et par des transducteurs intermédiaires si nécessaire. Ce type de circuit, à la portée de l'homme de l'art ne sera pas décrit.

Un mode de réalisation préférentiel sera maintenant décrit au moyen des figures 2, 3 et 4 déjà citées. Le fondoir-doseur 7 est équipé de vérins.

800 par rapport au niveau B ainsi que décrit précédemment. Les nacelles 300 sont amenées en circulation au moyens du circuit 401 au droit du fondoir-doseur 7. Chaque nacelle est munie ainsi que représenté sur la figure 2, d'une buse de vidange 302 à son extrémité inférieure. Le fondoir-doseur 7 est muni d'une buse d'entrée 700 comportant une vanne de commande 701, la buse d'entrée 700 étant spécialement adaptée pour entrer en connexion avec la buse de vidange 302 de chaque nacelle ainsi qu'il sera décrit de manière plus détaillée ci-après. Lors du passage de chaqué nacelle au droit du fondoir-

EP 0 195 695 B1

doseur 7, le déplacement des nacelles est arrêté, les vérins 800 équipant le fondoir-doseur 7 sont mis en action de manière à provoquer, par déplacement du fondoir-doseur 7 vers la nacelle, la mise bout-à-bout de la buse de vidange 302 de la nacelle et la buse d'entrée 700 du fondoir-doseur. La connexion étant effectuée, la vanne d'entrée 701 est commandée pour assurer le déversement du contenu de la nacelle dans le fondoir-doseur. Les vérins sont ensuite mis en position de repos, le fondoir-doseur étant en position de retrait par rapport à la nacelle, celle-ci pouvant continuer ensuite son trajet. Préalablement à la reprise du trajet par la nacelle après vidange, le circuit 401 ainsi que représenté en figures 3a et 3b comporte un élément mobile 402 indépendant du rail de guidage constituant le circuit 401. Sur la figure 3c, on a représenté à titre d'exemple la section du rail de guidage. L'élément mobile 402 possède par rapport au rail 401, un degré de liberté dans le seul sens vertical. L'élément mobile 402 est en outre relié par une suspension 404 et par l'intermédiaire de poulies 405, 406 à la poulie 710 solidaire de l'élément de pesage 711. Après vindage de la nacelle 300, le retrait partiel des vérins 800 a pour effet de dégager la buse d'entrée 700 de la buse de vidange 302 de la nacelle provoquant la fermeture automatique de celle-ci, l'élément de pesage 711 toujours soulagé de l'effort du fondoir-doseur 7 par les vérins étant soumis au seul effort de la nacelle vide 300 et de ses accessoires, lequel constitue une tare pour l'élément de pesage 711. La nacelle 300 peut être remplie par des moyens appropriés non figurés sur la figure 2, le dosage étant effectué par l'élément de pesage 711 compte tenu de la tare. La nacelle 300 peut alors reprendre son trajet pour un cycle supplémentaire, et les vérins 800 sont ramenés en position de retrait total pour la conduite ultérieure du processus. Afin d'assurer une bonne précision du dosage de la quantité de colloïde protecteur, ou d'autres substances, introduite dans la nacelle 300, l'élément 402 mobile peut comporter, ainsi que représenté en figure 3, deux plans inclinés 4021, 4020 concourrants, capables de former à leur intersection une position d'équilibre stable pour les galets 301 de déplacement de la nacelle 300. Bien entendu, la position d'équilibre stable est choisie en alignement de la direction de transmission d'efforts de la suspension 404 ainsi que représenté en figure 3a. Le circuit 401 ainsi que représenté en figure 4 peut présenter une station de vidage dosage notée VD en extrémité, comprenant l'élément mobile 402, un aiguillage 400, un circuit fermé comportant un pluralité de nacelles 300, celles-ci étant déplacées selon un cycle correspondant au temps de préparation d'une coulée d'émulsion entre une charge-dosage puis une vidange à la station de vidange-dosage VD.

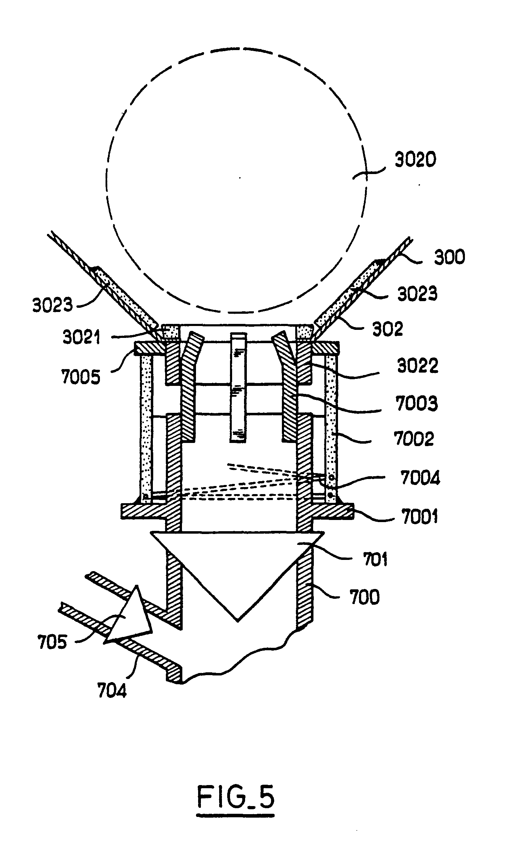

Un mode de réalisation particulièrement avantageux de la buse de vidange 302 de chaque nacelle 300 et de la buse d'entrée 700 du fondoir-doseur 7 sera maintenant décrit au moyen de la figure 5. La buse d'entrée 700 est constituée en fait par un tube comportant un épaulement 7001. Le tube comporte en outre des doigts ou index 7003 spécialement conformés de façon à permettre leur introduction dans le col d'ouverture 3022 de la buse de vindage 302. Une sphère pesante 3020 vient normalement, c'est-à-dire en l'absence des doigts 7003 précités, obturer le col 3022 de la buse de vindange 302. L'étanchéité de la fermeture est assurée par des garnitures en matériau élastique 3021 et 3023 disposées sur la paroi interne du col 3022 et sur la paroi interne de la buse de vindage 302 en forme de tronc de cône. Une fourreau 7002 constitué par une paroi ou manchon cylindrique souple renforcé par un ressort 7004 supporte un anneau de garde 7005 et prend appui sur l'épaulement 7001. L'introduction des doigts 7003 dans le col 3022 de la buse de vidange, sous l'action des vérins 800 a pour effet de dégager la sphère pesante 3020 et le transfert du contenu de la nacelle 300 dans le fondoir-doseur 7, la vanne 701 ayant été préalablement ouverte. Afin d'assurer un transfert rapide et sans perte du contenu de la nacelle 300, une prise 704 est en outre prévue entre le fondoir-doseur 7 et la vanne 701. La prise 704 est en outre munie d'une vanne 705. La prise 704 et la vanne 705 permettent, la vanne 701 étant fermée, d'effectuer un vide relatif dans le fondoir-doseur. Lors de la vidange, l'existence préalable de vide relatif dans le fondoir-doseur a pour effet un transfert pratiquement sans perte du contenu de la nacelle dans le fondoir-doseur 7.

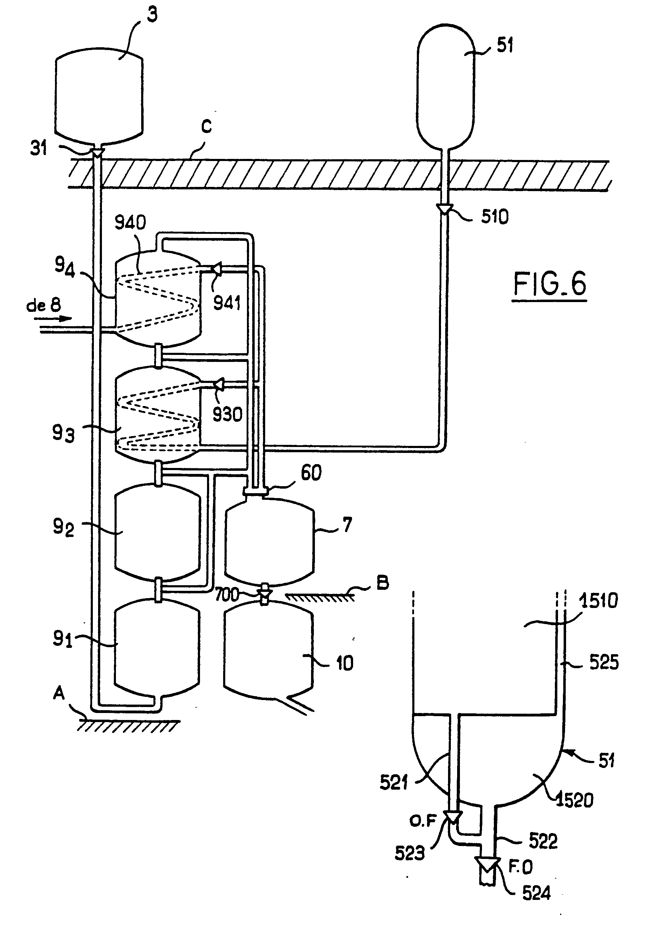

Une autre variante de réalisation de l'architecture de l'installation précitée, sera maintenant décrite en liaison avec la figure 6. Sur cette figure, le bouilleur 9 est, de manière avantageuse, subdivisé en une pluralité de bouilleurs élémentaires 9 notés $9_1$, $9_2$, $9_3$, $9_4$ superposés l'un au dessus de l'autre, entre les niveaux A et C. Ce mode de réalisation permet une vidange successive de chaque bouilleur élémentaire dans le fondoir-doseur 7 et, en définitive, permet de ne conserver, en fin d'opération, qu'un stock d'eau déminéralisée sensiblement égal au volume de l'un des bouilleurs élémentaires. En outre, la subdivision du bouilleur principal 9 en une pluralité de bouilleurs élémentaires $9_1$ à $9_4$ permet un réchauffement graduel en température de l'eau déminéralisée, chacun des boilleurs amenant l'eau à une température supérieure par palier jusqu'à la température finale obtenue au niveau du dernier bouilleur élémentaire $9_4$. Ainsi qu'il apparaît en outre en figure 6, cet agencément particulier présente de plus l'avantage de permettre un réchauffage sélectif de la ou des huiles en fonction de leur tenue en température. Ainsi, chaque bouilleur élémentaire peut par exemple être muni d'un serpentin dans lequel circule l'une des huiles. A titre d'exemple, ainsi que représenté en figure 6, l'huile de paraffine, venant du réservoir 8, est amenée dans le serpentin $9_{40}$ du bouilleur élémentaire $9_4$ final, lequel permet d'amener l'eau déminéralisée à sa température la plus élevée. Au contraire, une huile telle que l'huile d'avocat ou l'huile perhydrosqualène, lesquelles ont un degré de résistance moindre à l'élévation de température, peuvent être amenées dans un bouilleur intermédiaire élémentaire tel que $9_3$ dans lequel l'eau déminéralisée est amenée à une température plus basse. Sur la figure 6, on a représenté simplement deux des bouilleurs élémentaires, et la connexion de leur serpentin au résrevoir 8 contenant l'huile de paraffine et au réservoir 51 contenant l'une des huiles précitées. Bien entendu, cet exemple est donné de manière non limitative, un

5

nombre quelconque de bouilleurs élémentaires munis de serpentins pouvant naturellement être utilisé.

Des indications supplémentaires seront maintenant données dans le cas de la préparation de l'émulsion pharmaceutique dénommée "BIAFINE". Dans ce cas, les quantités de produit mises en jeu pour la préparation d'une quantité de six tonnes d'émulsion sont données ci-après. La mise en oeuvre du procédé de l'invention pour la préparation ou fabrication de six tonnes de BIAFINE nécessite le traitement, au moyen des installations précédemment décrites, de 327 kg de monostéarate de glycol, 96 kg de paraffine dure, traitée comme cire, 21 kg de palmitate de cétyle, de 217,50 kg d'acide stéarique, ces composants normalement à l'état solide constituant les cires. En outre, sont également traités conformément au procédé de l'invention 411 kg de paraffine liquide, 90 kg de perhydrosqualène, 138 kg de propanédiol 1,2 et 60 kg d'huile d'avocat constituant les huiles. Aux composants précités doivent en outre être ajoutés 40,2 kg de triéthanolamine constituant la base, se présentant sous forme de liquide, 42,12 kg d'alginate de sodium, colloïde protecteur, 1,38 kg de parahydroxy benzoate de méthyle 5,4 kg de parahydroxy benzoate de propyl et 7,8 kg de parfum. L'ensemble de ces composants nécessite la mise en oeuvre de 4320 kg d'eau déminéralisée, 3360 kg d'eau étant introduits dans la cuve à émulsion 10 et 960 kg d'eau déminéralisée étant utilisée pour la préparation du colloïde protecteur ou mucillage.

L'eau déminéralisée est amenée au moyen de la cuve 3 et du bouilleur 9 ou de l'ensemble des bouilleurs élémentaires à une température de 80°C. On comprendra que la température de 80°C de l'eau déminéralisée est atteinte soit dans la partie supérieure du bouilleur 9, soit dans le bouilleur élémentaire supérieur $9_4$ représenté en figure 6. Il est évident que le procédé de l'invention en continu ne met pas en jeu la totalité des quantités précitées de composants et d'eau déminéralisée en une seule coulée. Le procédé de l'invention permet au contraire la répétition sensiblement à l'identique de coulées successives sur des quantités plus faibles, le haut degré de fiabilité de l'ensemble permettant l'obtention d'un produit parfaitement homogène par coulée élémentaire et en définitive une production en continu ou en quasi-continu. Dans ce but, il est nécessaire de prévoir une production d'eau déminéralisée à 80°C, de 750 l par heure. La cuve 3 en conséquence est prévue d'une capacité de 8 à 900 l et le bouilleur 9 ou l'ensemble des bouilleurs élémentaires ont une capacité de 5000 l. L'eau de la cuve 3 est à une température de 25°C après réchauffage par l'échangeur 1. En fait, sur les 750 l d'eau déminéralisée utilisés par heure, 125 l sont utilisés pour la fabrication eu mucillage. La préparation du mucillage est effectuée avant la mise en route proprement dite l'installation de production par introduction de l'eau déminéralisée en quantité correspondante, soit dans les nacelles 300, soit dans la cuve à mucillage 11, l'alginate de sodium étant ensuite introduit à proportion dans ces mêmes éléments, l'ensemble étant soumis à agitation par exemple par les moyens 110, en vue d'assurer le gonflement de l'alginate de sodium. Cette préparation est normalement effectuée plusieurs heures avant la production proprement dite, le temps de gonflement requis étant de l'ordre de 12 heures sensiblement. En fait, dans le cas où le dispositif de l'invention comporte des nacelles 300, le circuit 401 de déplacement des nacelles peut avantageusement être conçu de façon à permettre un déplacement cyclique de ces nacelles sur le circuit, le cycle correspondant sensiblement au temps de préparation du mucillage. Dans ce but, le chargement de chaque nacelle étant effectué dans es conditions précédemment décrites à la gare de vidange de dosage VD, les nacelles sont ensuite déplacées à vitesse convenable pour revenir à cette même gare de vidange VD en fin de cycle. La préparation du mucillage ayant été lancée, il est maintenant nécessaire de lancer également la préparation des cires à l'état liquide. Les cires sont fondues à 80° au moyen des fondoirs 41, 42, 43 précités. Les différentes cires, conditionnées au départ à l'état solide, sont introduites dans des bains de cire correspondants afin d'assurer un niveau de charge de chaque fondoir à cire convenable. Parallèlement à la mise en route des fondoirs à cire, la mise en chauffe du fondoir-doseur 7 est effectuée puis également la mise en chauffe progressive de la cuve à émulsion 10. Le fondoir-doseur 7 et la cuve à émulsion 10 ayant atteint une température d'equilibre de 80°C sensiblement, une première quantité d'eau déminéralisée est introduite dans la cuve 10 par l'intermédiaire du fondoir-doseur 7. Bien entendu, le dosage de la quantité d'eau déminéralisée introduite est effectuée après tarage préalable de l'ensemble fondoir-doseur 7, élément de pesage 711. Ensuite, les cires sont introduites successivement dans le fondoir-doseur 7, le dosage étant effectué au moyen de ce dernier, après remise à zéro de la tare après chaque introduction. De la même manière, les huiles sont introduites dans le fondoir-doseur 7. Bien entendu, dans le cas ou les huiles introduites dans le fondoir-doseur 7 n'ont pas une température de 80°C, une période de réchauffement du fondoir-doseur 7, c'est-à-dire de son contenu, est prévue afin de ramener l'ensemble à la température de 80°C voulue. Bien entendu, le contenu du fondoir-doseur 7 est en outre soumis à agitation à l'aide des moyens 70. De préférence, la triéthanolamine a pu être introduite dans la cuve à émulsion 10, dans des conditions analogues, c'est-à-dire par l'intermédiaire du fondoir-doseur 7, préalablement à l'introduction des cires et huiles dans ce dernier. Le contenu du fondoir-doseur 7 contenant maintenant le mélange cire + huile à température d'émulsion, c'est-à-dire 80°C, est déverse dans la cuve à émulsion 10 par la commande des vannes telle que 720 et 103. Le contenu de la cuve à émulsion 10 est bien entendu soumis à agitation au moyen de système d'agitation 101, et le processus d'émulsion est alors engagé. L'introduction du mucillage peut alors être effectuée au moyens soit de la cuve à mucillage 11 et des moyens de dosage 111, soit bien entendu, de préférence, au moyen des nacelles 300, par l'intermédiaire du fondoir-doseur 7. On remarquera que le dosage du mucillage ayant été fait préalablement lors du chargement des nacelles, un deuxième dosage peut ou non être effectué au moyen du fondoir-doseur 7. Le mucillage introduit dans le bain d'émulsion contenu dans la cuve 10 est alors soumis à une agitation afin de constituer l'émulsion finale. Une demi heure environ après le lancement du processus d'émulsion proprement dit, l'émulsion ou coulée élémentaire d'émulsion est terminée, et le contenu de la cuve à émulsion 10 est envoyée par l'intermédiaire d'un sustème vanne de distribution-pompe 14, dans la cuve de stockage 12, dans laquelle un processus de refroidissement est engagé, l'émulsion étant soumise à agitation intermittente à l'aide des moyens 120. La cuve de stockage 12 est reliée à un conduit de sortie permettant de délivrer le produit final pour stockage en vrac ou pour le conditionnement. En outre, une conduite et une vanne 141 permettent une vidange totale de celle-ci. La cuve de stockage 12 est une cuve thermostatée du type à double paroi dans assurer le refroidissement du produit final, introduit à une température de 80°C sensiblement, à la température de 18°C environ.

Bien entendu, l'ensemble des opérations précitées est commandé par le processeur ou micro-ordinateur 1000. Celui-ci, avantageusement, permet la mise en oeuvre du procédé de l'invention de manière totalement automatisée au moyen de l'installation précitée. Le micro-ordinateur est muni d'un programme de conduite de processus, c'est-à-dire en fait un programme de conduite des différentes étapes du procédé précité, et de gestion de l'ensemble des installations précédemment décrit. Ce programme est un programme du type "menu" permettant à un opérateur, sur incitation correspondante inscrite dans le programme, de définir tous les paramètres de conduite du cycle de fabrication ainsi que tous les paramètres relatifs à la composition souhaitée du produit final obtenu. Dans ce but, à titre d'exemple non limitatif, le programme contenu dans les mémoires internes du micro-ordinateur 1000 comporte différents sous-programmes permettant notamment l'enregistrement de la recette du produit final, c'est-à-dire en fait la composition en poids de l'ensemble des constituants de l'émulsion y compris l'eau déminéralisée qui auront transité dans le fondoir-doseur 7. L'opérateur n'a dans ce but qu'à modifier les valeurs des paramètres correspondants introduites au clavier du micro-ordinateur. Des sous-programmes tels que la consommation effective de chacun des composants sont également prévus, lesquels permettent alors de donner à l'opérateur toute information concernant le rechargement nécessaire de chaque fondoir à cire ou réservoir à huile concerné afin d'assurer un maintien en charge convenable de l'installation. En outre, un sous-programme d'erreur de jetée permet de tenir compte, dans le dosage des produits ou composants, des variations de débit d'alimentation du fondoir-doseur 7 du fait de la variation de charge des réservoirs constituée par les fondoirs à cire ou par les réservoirs à huile et également des incertitudes de quantité effectivement introduite dans le fondoir-doseur 7 du fait de l'inertie de commande de chacune des vannes de l'installation. En outre, un programme ou sous-programme d'enregistrement des valeurs de tolérance dans la composition du produit final peut être prévu, afin d'assurer un contrôle permanent par l'opérateur ou si nécessaire par le pharmacien. La commande des vannes de l'ensemble du dispositif, des moyens d'agitation, des moyens de chauffage ou de régulation de température est assurée au moyen de paramètres dits de temporisation définis par l'opérateur par introduction des valeurs correspondantes $T_i$ au clavier du micro-ordinateur si nécessaire. En outre, un programme ou sous-programme de validation du tarage de l'élément de pesage 711 est en outre prévu de façon à tenir compte, au cours du processus, des différentes introductions de composants dans le fondoir-doseur 7 et en celà de permettre un dosage précis des composants ajoutés successivement dans celui-ci. Un organigramme des opérations essentielles effectuées au cours de la mise en oeuvre du procédé de l'invention au moyen de l'installation précédemment décrite sera donné dans les tableaux ci-après joints à la présente description.

L'expérience a montré que le fondoir-doseur est très précis en particulier lorsque le niveau des réservoirs d'alimentation est maintenu constant sensiblement. Par contre, si l'on utilise successivement six fois cent litres d'un réservoir de sept à huit cent litres, les erreurs de jetée peuvent varier entre +10% et −10% entre la première et la dernière pesée.

Afin d'obtenir des niveaux de charge constants, sensiblement, du fondoir-doseur, sans avoir à recharger les réservoirs après chaque pesée, les réservoirs, tels que le réservoir 51, ainsi que représenté en figure 6, peuvent être constitués par un réservoir à deux chambres séparées 1510, 1520. Les deux chambres précitées sont mises en communication par un conduit 521 lequel, par exemple, abouche dans le conduit de sortie 522 du réservoir 51. Un conduit 525 de faible ou très faible section met en communication la deuxième chambre 1520 avec le milieu environnant. Le conduit 525 peut, avantageusement, être placé à l'intérieur de la première chambre, sensiblement de façon à déboucher à l'extérieur du réservoir 51. Les conduits 521 et 522 sont respectivement munis d'une électrovanne 523, 524 de commande, la vanne 524 étant située en aval de l'abouchement de conduit 521 dans le conduit 522. Les électrovannes 523, 524 commandées en opposition de phase O.F, F.O., l'une étant ouverte et l'autre étant fermée, et réciproquement, permettent le remplissage de la chambre 1520 à partir de la chambre 1510, l'électrovanne 524 étant fermée, puis le chargement du fondoir-doseur par l'ouverture de la vanne 524, la vanne 523 étant fermée dans des conditions sensiblement analogues d'écoulement pour chaque utilisation grâce au volume constant de la chambre 1520 et au faible volume relatif du conduit 525. La chambre 1520 peut sans inconvénient être légèrement supérieure à la quantité à peser puisque la précision du dosage est assurée par le seul fondoir-doseur.

Il est possible d'augmenter le volume de la chambre 1520 si la cloison séparant les deux chambres peut être rendue amovible.

Le procédé de l'invention est particulièrement remarquable en ce qu'il permet la fabrication d'émulsions présentant un très grand degré de finesse et d'homogénéité par rapport aux émulsions obtenues jusqu'à présent au moyen des procédés traditionnels. On a pu constater, en effet, que l'émulsion préparée au moyen du procédé de l'invention présentait un très grand degré de finesse, alors que des émulsions préparées à partir des mêmes composants selon les procédés antérieurs ne pouvaient prétendre présenter un tel degré de finesse sur d'aussi grandes quantités. En raison d'une part de cette plus grande finesse du produit terminé et d'autre part d'une très grande constance dans l'homogénéité de ce produit, il apparaît en outre que, notamment dans le cas de médicaments tels que la BIAFINE, le mode d'application et en définitive l'effet thérapeutique peuvent être optimalisés et donc améliorés en fonction de chacune des applications.

TABLEAU I

Operations de programmation pour la fabrication

| |
|---|
| Action touche réglage des erreurs de jetée |
| Action touche réglage du controle de tolérance |
| Action touche d'enregistrement des recettes |
| Action touche réglage du 0 de bascule (711) |
| Action touche d'enregistrement des temporisations T |

Clavier micro-ordinateur (1000)

Suite tableau II

8

## TABLEAU II

Operations de preparation a la pesee
Suite de tableau I

---

**Contrôle visuel des températures dans**

les fondoirs cires (41, 42, 43)
la cuve de stockane eau (3, 9)

**Mise en route (télécommande) des agitations:**

- mucillage (11, 300)
- fondoirs cires

---

**Chargement en eau de la cuve de fabrication (10) (opération de déclenchement manuelle)**

- ouverture de 30
- après incorporation remise à 0 (mini rupteur)
- fermeture 30

---

**Si t° < 70° déclenchement du réchauffage, circuit primaire**

- mise sous tension du rèchauffeur en ligne (règulée)

cuve à émulsion 10

---

**Acquit de chargement — envoi triethanolamine**
- analyse du contact
- fermeture de VA24 normalement ouverte
- ouverture de VA23

---

**Agitation (101)**      sur la cuve de fabrication 10
**(Pré-émulsion)**

↓ Suite tableau III

TABLEAU III

Operations de pesée automatique
Suite de tableau III

```
┌─────────────────────────────────┐
│  Choix du mode de fonctionnement │
│        marche manuelle           │
│        marche automatique        │
│  Mise sous tension de l'imprimante│
└─────────────────────────────────┘
```

Choix du mode de fonctionnement
marche manuelle
marche automatique
Mise sous tension de l'imprimante

Commutation en automatique
arret: des agitations
maintien sous tension: chaudière électrique
chauffage du stockage d'eau
Réchauffage d'eau en fabrication

Commutation
marche manuelle

clavier
micro-ordinateur
1000

Action touche lancement fabrication

Action touche départ cycle

Contrôle de l'arret des agitations et pompes
Contrôle de la fermeture de 720
Contrôle de l'acquit incorporation manuelle
Contrôle de O de bascule

Tarage de l'indicateur (remise à O)
(711)

Pesée des cires ouverture de 410, 420, 430
fermeture de 720, 900, 910

Pousse à l'air
ouverture temporise de

Tarane de l'indicateur
(remise à O) 711

Pesée de la paraffine — ouverture et fermeture de 80,900

Suite tableau IV

TABLEAU IV

Suite de tableau III

```
┌─────────────────────────────────────────────────┐
│ Tarage de l'indicateur (remise à O)              │
│                    711                           │
└─────────────────────────────────────────────────┘
            │
┌─────────────────────────────────────────────────┐
│ Pesée du propanédiol ouverture et fermeture de 430 │
└─────────────────────────────────────────────────┘
            │
┌─────────────────────────────────────────────────┐
│ Tarage de l'indicateur (remise à O)              │
│                 711                              │
└─────────────────────────────────────────────────┘
            │
┌─────────────────────────────────────────────────┐
│ Pesée de la perhydrosqualène ouverture et fermeture de 510 │
└─────────────────────────────────────────────────┘
            │
┌─────────────────────────────────────────────────┐
│ Tarage de l'indicateur (remise à O)              │
│                 711                              │
└─────────────────────────────────────────────────┘
            │
┌─────────────────────────────────────────────────┐
│ Pesée de l'huile d'avocat ouverture et fermeture de 520 │
└─────────────────────────────────────────────────┘
            │
┌─────────────────────────────────────────────────┐
│ Tarage de l'indicateur (remise à O)              │
│                 711                              │
└─────────────────────────────────────────────────┘
            │
┌───────────────────────────────┐   ┌───────────────────────────────┐
│ Déclenchement de l'agitation sur │   │ Démarage de la régulation     │
│ le fondour huile (temporisé) 70  │───│ thermique du fondoir 7        │
└───────────────────────────────┘   └───────────────────────────────┘
            │
┌─────────────────────────────────────────────────────────────────┐
│ Comparaison des températures entre le fondoir huile et l'eau en fabrication │
│              (7)                          (10)                   │
└─────────────────────────────────────────────────────────────────┘
            │
┌───────────────────────────┐       ┌────────────────────────────────────┐
│ Arret de l'agitation du    │       │ Déclenchement des deux agitations de la │
│ fondoir huile — défaut 8   │       │ cuve de fabrication — 10            │
│           (70)             │       │ temporisation T2                   │
└───────────────────────────┘       └────────────────────────────────────┘
            │
┌───────────────────────────┐
│ Arret de la régulation     │
│ du fondoir huile 7         │
└───────────────────────────┘
            │
            ▼  Suite de tableau V
```

# EP 0 195 695 B1

## TABLEAU V

### Suite de tableau IV

| Vidange du fondoir 7 — ouverture et fermeture temporisé de 710 |

| Attente de la zone de O bascule temporisation T1 (711) |

| Envoi du mucillage après arret de l'agitation temporisée sur la cuve de fabrication (10)

après incorporation remise a O (mini rupteur) 711 |

| (101) Déclenchement des deux agitation sur la cuve de fabrication temporisation T4 |

| Vidange de la cuve de fabrication (temporisation T5) (102)

ouverture et fermeture de 102, 103 |

| Fin de cycle de fabrication |

| Mise en route de la réfrigération (télécommande) (121, 122) |

| Mise en route de l'agitation sur le stockage produit (120) |

## Revendications

1. Procédé de fabrication en continu d'une émulsion comprenant, dans un premier liquide, une pluralité de composants en suspension, caractérisé en ce qu'il consiste:
   à amener lesdits composants à l'état liquide de façon à constituer une pluralité de deuxièmes liquides susceptibles d'être introduits en suspension dans le premier liquide,
   à introduire à proportion en masse dans un fondoir-doseur lesdits composants sous forme liquide et à amener le contenu dudit fondoir-doseur à température d'émulsion,
   à amener une quantité déterminée de premier liquide à température d'emulsion,
   à verser la quantité de premier liquide et le contenu du fondoir-doseur dans une cuve à émulsion,
   à provoquer dans la cuve à émulsion ladite émulsion par agitation.

2. Procédé selon la revendication 1, caractérisé en ce que l'introduction à proportion de tout ou partie desdits composants dans ledit fondoir-doseur est effectuée au moyen de celui-ci.

3. Procédé selon l'une des revendications 1 ou 2 précédentes, caractérisé en ce que lesdits composants comprenant des cires, lesdites cires sont amenées à l'état fondu séparément et introduites successivement dans le fondoir-doseur.

4. Procédé selon l'une des revendications 1 à 3 précédentes, caractérisé en ce que lesdits composants comprenant des huiles, chacune d'elles est introduite successivement dans le fondoir-doseur.

5. Procédé selon l'une des revendications précédentes, caractérisé en ce que lesdits composants comprenant un colloïde, celui-ci est introduit de préférence dans le fondoir-doseur.

6. Procédé selon l'une des revendications précédentes, caractérisé en ce que la préalablement à l'introduction dudit premier liquide dans la cuve à émulsion, celui-ci est amené dans ledit fondoir-doseur de façon à déterminer ledit premier liquide en quantité.

7. Dispositif de fabrication en continu d'une émulsion, contenant dans un premier liquide une pluralité de composants en suspension, comprenant des moyens (41, 42, 43, 51, 52) pour amener lesdits composants à l'état liquide de façon à constituer une pluralité de deuxièmes liquides susceptibles d'être introduits en suspension dans le premier liquide, des moyens (1, 2, 3, 9) permettant d'amener une quantité déterminée dudit premier liquide à température d'émulsion, une cuve à émulsion (10) susceptible de recevoir ladite quantité de premier liquide et munie de moyens propres (100, 101) capables de provoquer l'émulsion, caractérisé en ce qu'il comporte:

un fondoir-doseur (7) permettant de recevoir à proportion en masse lesdits composants sous forme liquide et le premier liquide, ledit fondoir-doseur étant en outre capable d'amener son contenu à la température d'émulsion, ladite cuve à émulsion étant susceptible de recevoir aussi le contenu dudit fondoir-doseur.

8. Dispositif selon la revendication 7, caractérisé en ce que, en vue d'introduire dans l'émulsion une substance colloïdale ou colloïde, ledit dispositif comporte en outre un réservoir à colloïde (11), et des moyens de chargement-dosage en colloïde (111).

9. Dispositif selon la revendication 7, caractérisé en ce que le réservoir à colloïde (11) et les moyens de chargement dosage en colloïde (111) permettent le chargement du colloïde soit dans la cuve à émulsion, soit dans le fondoir-doseur (7) par l'intermédiaire d'un vanne (103).

10. Dispositif selon l'une des revendications 7 à 9 précédentes, caractérisé en ce que en vue de permettre l'introduction à proportion des composants et du premier liquide, lesdits composants et ledit premier liquide sont introduits dans la cuve à émulsion (10) par l'intermédiaire du fondoir-doseur (7).

11. Dispositif selon l'une des revendications 7 à 10 précédentes, caractérisé en ce que l'architecture de l'ensemble de l'installation est agencée par rapport à au moins trois niveaux de référence successifs (C, B, A), le chargement successif du fondoir-doseur (7) en composants et en premier liquide puis de la cuve à émulsion (10) étant effectué par gravimétrie.

12. Dispositif selon la revendication 11, caractérisé en ce que le réservoir à colloïdes (11) est constitué par un train de nacelles élémentaires (300) se déplaçant selon un circuit déterminé (401), ledit circuit (401) comportant au moins un poste vidange-dosage (VD), chaque nacelle 300 circulant à un niveau (C) supérieur au niveau (B) du fondoir-doseur (7) et étant apte à délivrer son contenu à celui-ci.

13. Dispositif selon l'une des revendications 7 à 12, caractérisé en ce que l'ensemble de celui-ci est conduit par un microprocesseur ou micro-ordinateur (1000).

14. Dispositif selon l'une des revendications 7 à 13, caractérisé en ce que le fondoir-doseur (7) permet, à chaque introduction des composants à l'état liquide, une détermination précise de la masse de chaque composant introduite dans celui-ci.

15. Dispositif selon l'une des revendications 7 à 14, caractérisé en ce que afin d'obtenir des niveaux de charge constants, sensiblement, du fondoir-doseur, chaque réservoir (51) comprend deux chambres séparées (510, 520), les deux chambres étant en communication par un conduit (521), le conduit de sortie (522) du réservoir et le conduit (521) étant munis d'électrovannes (523), (524) permettant le remplissage de la chambre (520) puis le chargement du fondoir-doseur dans des conditions sensiblement analogues d'écoulement pour chaque utilisation.

**Patentansprüche**

1. Verfahren zur kontinuierlichen Herstellung einer Emulsion mit einer Mehrzahl in einer ersten Flüssigkeit ungelösten Bestandteilen, dadurch gekennzeichnet, daß das Verfahren darin besteht:

die Bestandteile im flüssigen Zustand zuzuführen, so daß sie eine Mehrzahl zweiter Flüssigkeiten bilden, die geeignet sind, in suspension in die erste Flüssigkeit eingeführt zu werden,

die Bestandteile im flüssigen Zustand in Mengenverhältnissen in einen Dosierschmelzkessel einzuführen und den Inhalt des Dosierschmelzkessels auf eine Emulsionstemperatur zu bringen,

eine bestimmte Menge der ersten Flüssigkeit auf eine Emulsionstemperatur zu bringen,

die Menge der ersten Flüssigkeit und den Inhalt des Dosierschmelzkessels in eine Emulsionswanne zu gießen und

die Emulsion in der Emulsionswanne durch Rühren zu erzeugen.

2. Verfahren nach Anspruch 1, dadurch gekennzeichnet, daß das Einführen in Mengenverhältnissen aller oder eines Teils der Bestandteile in den Dosierschmelzkessel mit dessen Hilfe durchgeführt wird.

3. Verfahren nach einem der vorhergehenden Ansprüchen 1 oder 2, dadurch gekennzeichnet, daß die Bestandteile Wachse umfassen, wobei die Wachse im geschmolzenen Zustand getrennt zugeführt werden und sukzessive in den Dosierschmelzkessel eingeführt werden.

4. Verfahren einem nach der vorhergehenden Ansprüchen 1 bis 3, dadurch gekennzeichnet, daß die Bestandteile Öle umfassen, wobei jedes dieser Öle sukzessive in den Dosierschmelzkessel eingeführt wird.

5. Verfahren einem nach der vorhergehenden Ansprüchen, dadurch gekennzeichnet, daß Bestandteile ein Kolloid umfassen, welches vorzugsweise in den Dosierschmelzkessel eingeführt wird.

6. Verfahren einem nach der vorhergehenden Ansprüchen, dadurch gekennzeichnet, daß vor dem Einführen der ersten Flüssigkeit in die Emulsionswanne, diese in den Dosierschmelzkessel zugeführt wird, um die Menge der ersten Flüssigkeit zu bestimmen.

7. Vorrichtung zur kontinuierlichen Herstellung einer Emulsion, die in einer ersten Flüssigkeit eine Mehrzahl von un gelösten Bestandteilen enthält, mit einer Vorrichtung (41, 42, 43, 51, 52) zum Zuführen der Bestandteile im flüssigen Zustand, so daß eine Mehrzahl zweiter Flüssigkeiten gebildet wird, die geeignet sind, in suspension in die erste Flüssigkeit eingeführt zu werden, mit einer Vorrichtung (1, 2, 3, 9), die erlaubt, eine bestimmte Menge der ersten Flüssigkeit bei Emulsionstemperatur zuzuführen, einer Emulsionswanne (10), die geeignet ist, die Menge der ersten Flüssigkeit aufzunehmen und die mit einer Vorrichtung (100, 101) ausgestattet ist, die geeignet ist, eine Emulsion zu erzeugen, dadurch gekennzeichnet, daß sie aufweist:

einen Dosierschmelzkessel (7), der ermöglicht, die Bestandteile in Mengenverhältnissen in flüssiger Form und die erste Flüssigkeit aufzunehmen, wobei der Dosierschmelzkessel außerdem geeignet ist, seinen Inhalt auf die Emulsionstemperatur zu bringen, wobei die Emulsionswanne außerdem dazu geeignet ist, den Inhalt des Dosierschmelzkessels aufzunehmen.

8. Vorrichtung nach Anspruch 7, dadurch gekennzeichnet, daß mit Hinblick auf das Einführen einer kolloidalen Substanz oder eines Kolloids in die Emulsion die Vorrichtung außerdem ein Kolloidreservoir (11) und eine Vorrichtung (111) zum dosierten Laden von Kolloiden aufweist.

9. Vorrichtung nach Anspruch 7, dadurch gekennzeichnet, daß das Kolloidreservoir (11) und die Vorrichtung (111) zum dosierten Laden von Kolloiden das Laden des Kolloids entweder in die Emulsionswanne oder in den Dosierschmelzkessel (7) über einen Schieber (103) erlaubt.

10. Vorrichtung nach einem der vorhergehenden Ansprüche 7 bis 9, dadurch gekennzeichnet, daß mit Hinblick auf Ermöglichung des Einführens in Verhältnissen der Bestandteile und der ersten Flüssigkeit die Bestandteile und die erste Flüssigkeit über den Dosierschmelzkessel (7) in die Emulsionswanne (10) eingeführt werden.

11. Vorrichtung nach einem der vorhergehenden Ansprüche 7 bis 10, dadurch gekennzeichnet, daß die Architektur der Gesamtheit der Installation bezüglich wenigstens dreier aufeinanderfolgender Bezugsniveaus (C, B, A) angeordnet ist, wobei das sukzessive Laden des Dosierschmelzkessels (7) mit den Bestandteilen und der ersten Flüssigkeit und dann das Laden der Emulsionswanne (10) durch Gravimetrie ausgeführt wird.

12. Vorrichtung nach Anspruch 11, dadurch gekennzeichnet, daß das Kolloidreservoir (11) aus einem Zug von Elementarschiffchen (300) besteht, die sich nach einer bestimmten Bahn (401) verrücken, wobei die Bahn (401) wenigstens eine Dosierablaßstelle (VD) aufweist, wobei sich jedes Schiffchen 300 auf einem Niveau (C) oberhalb des Niveaus (B) des Dosierschmelzkessels (7) bewegt und geeignet ist, seinen Inhalt an diesen zu übergeben.

13. Vorrichtung nach einem der Ansprüche 7 bis 12, dadurch gekennzeichnet, daß die Gesamtheit derselben von einem Mikroprozessor oder einem Mikrocomputer (1000) gesteuert wird.

14. Vorrichtung nach einem der Ansprüche 7 bis 13, dadurch gekennzeichnet, daß der Dosierschmelzkessel (7) bei jedem Einführen der Bestandteile im flüssigen Zustand eine genaue Bestimmung der Masse jedes in diesen eingeführten Bestandteils erlaubt.

15. Vorrichtung nach einem der Ansprüche 7 bis 14, dadurch gekennzeichnet, daß zum Erhalten von etwa konstanten Ladeniveaus des Dosierschmelzkessels jedes Reservoir (51) zwei getrennte Kammern (510, 520) aufweist, wobei die beiden Kammern über ein Rohr (521) in Verbindung stehen, wobei das Ablaßrohr (522) des Reservoirs und das Rohr (521) mit Elektroschiebern (523, 524) versehen sind, die das Auffüllen der Kammer (520) und anschließend das Laden des Dosierschmelzkessel unter für jede Verwendung weitgehend analogen Ablaufbedingungen ermöglichen.

## Claims

1. A process for the continous manufacture of an emulsion comprising, in a first liquid, a plurality of components in suspension, said process consisting in:

bringing said components to the liquid state in a manner to constitute a plurality of second liquids able to be introduced in suspension into said first liquid,

introducing in mass proportion into a melting pot-dosimeter said components in liquid form and bringing the contents of said melting pot-dosimeter to the temperature of emulsion,

bringing a predetermined quantity of said first liquid to the temperature of emulsion,

pouring of said quantity of said first liquid and said contents of said melting pot-dosimeter into an emulsion vat, and

causing emulsion in said emulsion vat by agitation.

2. A process according to claim 1, wherein said introduction in proportion of all or part of said components into said melting pot-dosimeter is carried out by means of the latter.

3. A process according to one of claims 1 or 2, wherein the said components comprise waxes, said

14

waxes being brought to the melted state separately and introduced successively into said melting pot-dosimeter.

4. A process according to one of claims 1 to 3, wherein said components comprise oils, each of which is introduced successively into said melting pot-dosimeter.

5. A process according to one of the preceding claims, wherein said components comprise a colloid, which is introduced into said melting pot-dosimeter.

6. A process according to one of the preceding claims, wherein preliminarily to said introduction of said first liquid into said emulsion vat, it is brought into said melting pot-dosimeter in a manner to determine the quantity of said first liquid.

7. Apparatus for continuous manufacture of an emulsion, containing in a first liquid a plurality of components in suspension, said apparatus comprising:

means (41, 42, 43, 51, 52) for bringing said components to the liquid state in order to constitute a plurality of second liquids able to be introduced in suspension into said first liquid,

means (1, 2, 3, 9) permitting bringing of a predetermined quantity of said first liquid to the temperature of the emulsion,

an emulsion vat (10) adapted to receive said quantity of said first liquid and provided with means (100, 101) for causing emulsion, characterised in that it comprises:

a melting pot-dosimeter (7) adapted to receive in mass proportions said components in liquid form and said first liquid, said melting pot-dosimeter being in addition capable of bringing its contents to the temperature of emulsion, said emulsion vat being adapted to receive also the content of said melting pot-dosimeter.

8. Apparatus according to claim 7, wherein said apparatus comprises in addition a colloid reservoir (11) and means (111) for loading and measuring colloid in order to introduce into the emulsion a colloidal substance or a colloid.

9. Apparatus according to claim 7, wherein said colloid reservoir (11) and said means (111) for loading and measuring colloid are adapted for loading of said colloid into said emulsion vat or into said melting pot-dosimeter (7) by way of a valve (103).

10. Apparatus according to one of claims 7 to 9, wherein said apparatus is adapted for said components and said first liquid to be introduced into said emulsion vat (10) via the intermediary of said melting pot-dosimeter (7) for introduction in proportion of said components and said first liquid.

11. Apparatus according to one of claims 7 to 10, wherein the lay-out of said apparatus is arranged with respect to at least three successive reference levels (C, B, A), whereby the successive charging of said melting pot-dosimeter (7) with said components and with said first liquid, then of said emulsion vat (10) is carried out by gravimetry.

12. Apparatus according to claim 11, wherein said colloid reservoir (11) is constituted by a train of elemental skips (300) and said apparatus includes a predetermined circuit (401) for displacement of said skips, said circuit (401) having at least one emptying and measuring station (VD), each said skip (300) circulating at one level (C) higher than another level (B) of said melting pot-dosimeter (7) and each said skip being adapted to deliver its contents into said melting pot-dosimeter.

13. Apparatus according to one of claims 7 to 12, including a microprocessor or micro-computer (1000) for operating the assembly of said apparatus.

14. Apparatus according to one of claims 7 to 13, wherein said melting pot-dosimeter (7) is adapted for, on each introduction of said components in liquid form, a precise determination of the mass of each component introduced into it.

15. Apparatus according to one of claims 7 to 14, wherein to obtain substantially constant levels of load of said melting pot-dosimeter, each said reservoir (51) comprises:

two separate chambers (510, 520),

a duct (521) putting said two chambers in communication,

an outlet duct (522) from said reservoir,

electric valves (523, 524) in said duct (521) respectively for enabling the filling of one (520) of said chambers after loading of said melting pot-dosimeter in substantially analogous flow conditions for each utilisation.

FIG_1

STOCKAGE VRAC
ou CONDITIONNEMENT

VIDANGE

FIG_3

FIG_4

FIG_2

FIG_5

FIG.6